# EUROPEAN PATENT APPLICATION

(11) **EP 0 853 304 A1**
(43) Date of publication of application: **15.07.1998**
(21) Application number: 97309119.2
(22) Date of filing: 13.11.1997
(51) Int. Cl.: G09B 29/00, G09F 7/08

(54) **Planning system**

(30) Priority: 13.12.1996 GB 9625994
(71) Applicant: Nobo (UK) Limited, Eastbourne, East Sussex BN23 6PW (GB); SHARP MICROELECTRONICS TECHNOLOGY, INC., Camas, WA 98607 (US)
(72) Inventor: Hacker, Mark, Eastbourne, East Sussex BN22 8RU (GB)
(74) Representative: Hughes, Andrea Michelle

(57) **Abstract**

The present invention relates to a planning system comprising a backing board 1 and a number of panels 2 adapted to be mounted onto the backing board 1, e.g. by adhesive pads 3. The panels are provided as a substantially flat "blank" made of card or cardboard such that they can be folded, by the user, into a three-dimensional panel. The resulting panel has a number of slots adapted to receive T-shaped cards.

## Description

Planning systems or planners of many types are used in a wide range of applications, e.g. in offices, factories, hospitals, schools, doctors' surgeries, taxi headquarters, etc for providing an "at-a-glance" chart of appointments, deadlines, etc.

Some systems are as simple as a notice board or planning chart mounted on a wall at an appropriate location, showing relevant information.

Notice boards, however, do not provide a particularly organised planning system. Planning charts generally provide limited information if they are not to become too complex.

Write on-wipe off wall-mounted planners and magnetic wall-mounted planners are known on which are printed, e.g. a calendar having a space corresponding to each date. Removable stickers or magnets may be used to record appropriate information, e.g. staff holidays, deadlines, meetings etc on the chart. Alternatively, for charts laminated with a "wipe-off" surface, appointments etc can be written on the chart with a suitable pen or marker. With such systems, however, the amount of information which can be shown clearly, in an organised and easy-to-read manner, is limited.

A system which has found favour in a wide variety of applications, due to its being organised, clear, versatile and easy to use is the so-called T-card system. This system allows a large amount of information to be stored. The information is easily scanned, up-dated and manipulated.

In general, a T-card system includes a rear backing panel adapted to receive a number of elongate panels which are mounted side-by-side onto the backing panel. The system is generally adapted to be wall-mounted.

Each panel is provided with a number of horizontal slots in its front face. The slots are adapted to receive information-carrying T-shaped cards, known as T-cards. The body of the card is inserted into the slot, with the top of the T-card remaining visible. The Systems generally have an additional end panel attached to the backing panel, forming an index panel.

A horizontal title bar along the top of all of the slotted panels allows each panel to be allocated a title. For example, each panel may be associated with a particular member of staff, a particular department, a month of the year etc. The index panel provided along a vertical edge, indicates, e.g. the time of day, date, etc, corresponding to each slot in the panels.

Thus, for example, a system may have four panels, one for each of four members of staff. Each panel may then have, e.g. 16 slots corresponding to each half hour of the working day. The top edges of the panels are aligned with the appropriate title on the title bar and the slots are aligned with the appropriate time of day, etc on the vertical index panel. Cards can then be inserted in appropriate slots to detail each person's appointments for that day.

The visible top of the T-cards may identify the general theme of the information with further details being written on the body of the card.

The panels are generally made of lightweight metal, e.g. aluminium, or of plastic. They generally have a long rectangular front face in which slots are formed, and a U-shaped or C-shape cross-section allowing them to be mounted in slots provided on the backing panel such that the front face of each panel is spaced apart from the backing panel.

One problem with known T-card systems is that they can be somewhat bulky and heavy and so difficult to package, store and transport.

The aim of the present invention is to provide a planning system which has all of the advantages of the known T-card system but overcomes the disadvantages.

According to a first aspect, the present invention provides a planning system comprising: a backing board, and one or more panels adapted to be mounted onto said backing board, said panels being provided with a plurality of slots adapted to receive T-shaped cards; wherein the or each of said panels is provided in the form of a blank adapted to be assembled by the user into a three-dimensional panel.

This provides a system which can be flat-packed, making it easy to package, store, transport and assemble. Whilst different materials may be used, cardboard or a similar material provides a particularly lightweight system.

Thus, according to a second aspect of the invention, there is provided a planning system comprising: a backing board, and one or more panels adapted to be mounted onto said backing board, said panels being provided with a plurality of slots adapted to receive T-shaped cards; wherein the or each of said panels is provided in a substantially flat form and is made of card or cardboard such that it can be folded by the user into a three-dimensional panel.

According to a third aspect, there is provided a panel for mounting onto a backing board of a planning system, said panel having a front face in which are provided a plurality of slots adapted to receive T-shaped cards; said panel further comprising fastening points for attaching to said backing board such that, in use, the front face is spaced from the backing board and wherein said panel is provided as a flat sheet of card or similar material adapted to be folded by the user to form a three-dimensional panel.

The panels are formed into a shape such that they can be attached to the backing board so that the front face, in which the slots are provided, is spaced from the backing board, thus defining a space for the main body of the T-cards inserted into the slots.

The slots are preferably smaller than the width of the top of the T-card such that when a card is inserted into the slot, the top remains visible on the front of the panel.

Each panel, when assembled, preferably forms a long rectangular box having a front face, in which the slots are formed, and a rear-face which is attached to the backing board. Alternatively, the panels may be U-shaped or C-shaped but these are less robust.

Whilst the panels may be fixed to the backing board by any suitable fixing means, the preferred embodiment uses one or more, preferably two, double-sided adhesive pads between each panel and the backing board.

One panel may be used as an index panel, containing information relevant to cards inserted in corresponding slots in the other panels. In the preferred embodiment, however, an index is marked on the backing board, preferably along the left-hand side. This reduces the number of panels needed.

A title bar may also be printed along the top of the backing board, with divisions corresponding to each panel.

The backing board itself is preferably also made of stiff board and the panels and backing board are preferably provided with an aqua-seal coating.

The system of the present invention is thus lightweight, collapsible, easy to assemble and can be flat-packed for easy storage and transport. However, the system maintains the advantages of being durable and robust.

A preferred embodiment will now be described, by way of example only, with reference to the accompanying drawings.

Figure 1 shows a front view of a planning system according to the present invention.

Figure 2 shows the backing board of Figure 1, prior to assembly.

Figure 3 shows one of the panels of Figure 1 prior to assembly.

Figure 4 shows the mounting of a panel to the backing board.

The system is provided "flat-packed" and includes a backing board 1, a number of panels 2 and adhesive pads 3. The package usually also includes a pack of standard T-cards and a marker pen for use with the system.

Different size systems can be provided for different applications. It is envisaged that the system will be manufactured in three standard sizes, namely 4 panel, 7 panel and 12 panel sizes. Of course, systems having any number of panels can be made.

The backing board 1 is made of card or cardboard with an aqua-seal coating to improve its durability. The coating also provides a "write on-wipe off" surface which allows a marker pen to be used. Releasable stickers may also be removably attached to the backing board 1.

The backing board 1 may be a one-piece board. For larger systems, however, the board may be formed of two halves, hinged 4 together by e.g. a strip of tape on the reverse side (not shown) . This allows the board to be packaged, stored and transported, folded in half and then opened out for assembly.

An index column 5 is printed on the board 1, preferably along the left-hand side. The index 5 has a number of horizontal divisions 6 printed down its length, corresponding to the number of slots in the panels 2. In the example shown, the index has 31 divisions, making it ideal for monthly planning. Of course the system could have any number of divisions.

In the examples shown, the divisions are numbered 1 to 31. Alongside each number is a space in which can be written a suitable title for that particular row of slots, e.g. a date or a time.

Along the top or bottom (preferably the top) of the backing board 1 is printed a title bar 7 having a number of divisions corresponding to the number of panels 2. The divisions provide spaces for writing appropriate titles, e.g. names or months of the year, for each panel 2.

The inner area of the face of the backing board 1 is printed with information for assembling the system, including marks 8 indicating where the panels 2 are to be fastened to the backing board 1, as described below.

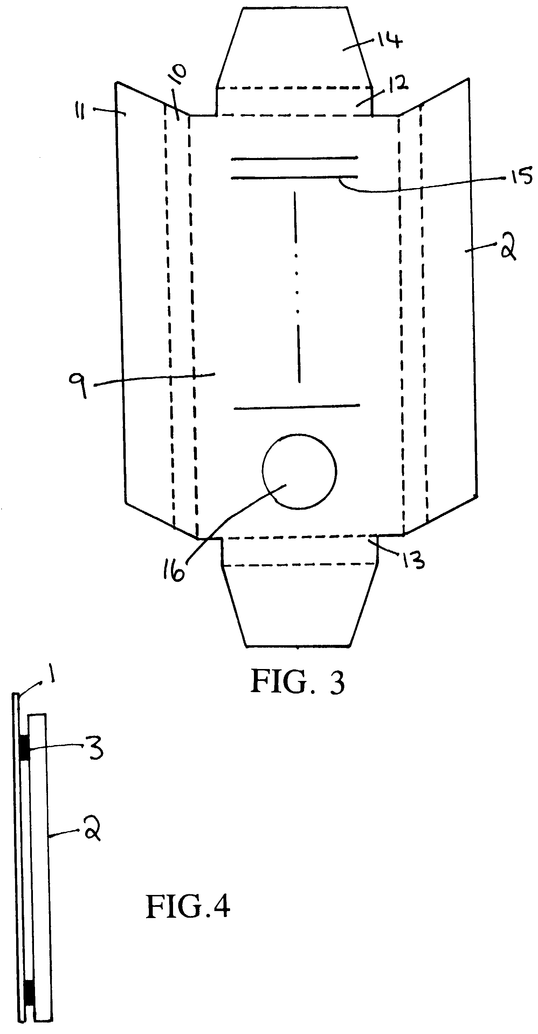

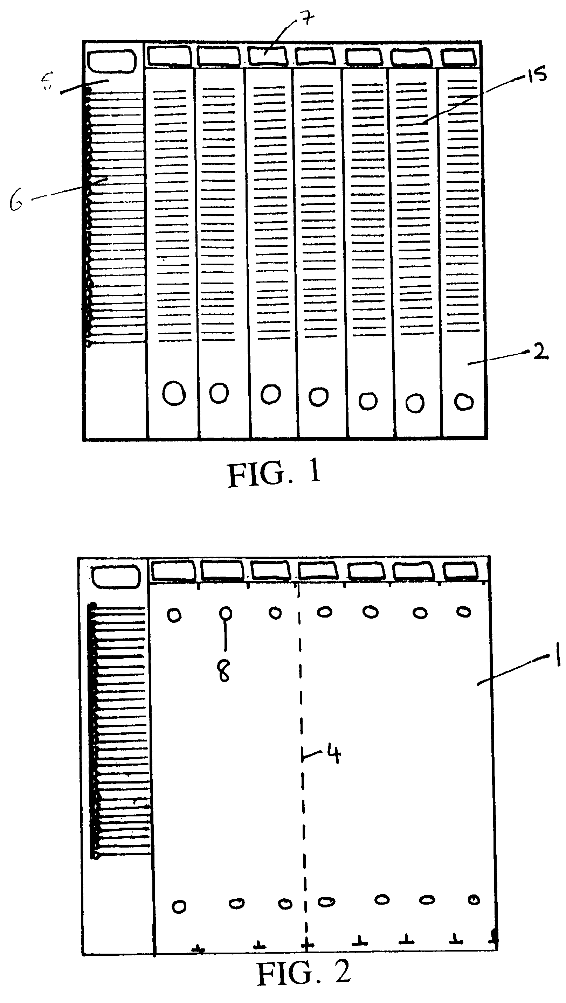

Each panel 2 is provided in the form of a flat, shaped cardboard sheet or blank, as shown in Figure 3. The sheet is shaped and provided with fold lines such that when folded correctly, it forms a long, thin rectangular box having a front and a back surface, two long sides, a top and a bottom.

The flat sheet thus has a main elongate rectangular central region 9, flanked by side portions 10 which, in turn, are flanked by back flaps 11. The top and bottom of the central region 9 extend to form top and bottom edge regions 12, 13 respectively. These further extend to form tapered back flaps 14.

To assemble the panel 2, folds are made along the fold lines shown as dotted lines in Figure 3. The back flaps 11, 14 are fixed together e.g. by adhesive or interlocking tongues and slots to form the back surface of the box forming the panel 2.

It is not essential that the back of the panel 2 extends along the whole width or length of the panel. It is sufficient that the back of the panel provides some point for attachment to the backing board 1. The preferred arrangement described above, however, provides a more robust and easy to mount panel.

The central region 9, forming the front face of the panel 2, is provided with a number of identical horizontal slots 15, equally spaced apart from each other, parallel to the top and bottom of the panel 2. The slots 15 are adapted to receive standard T-cards such that the top of the T, being wider than the slot, remains visible on the front face of the panel 2 when the body of the card is inserted into the slot. The spacing between the slots should preferably be equal to or greater than the width of the top of the T-card to avoid overlap of cards when adjacent slots are filled.

In the example shown, a circle 16 is also cut out of the front face of the panel 2. This provides a finger grip for lifting and placing the assembled panel 2. This is mainly a design feature, to make the assembled system look like the known metal or plastic systems which have more need for such a feature.

Fixing means for affixing the assembled panels to the backing board 1 are provided. These may be e.g. double sided adhesive pads 3 with a peel-off backing covering the adhesive.

In use, the backing is removed from the pads 3 which are then stuck at appropriate positions on the backing board 1, preferably corresponding to the eventual location of a top and bottom region of the back of each assembled panel 2. The panels 2 are then positioned on the board 1, aligned with the title divisions. The slots 15 are aligned with the index divisions. The adhesive pads 3 hold the panels 2 in position on the board 1.

Double sided adhesive pads or other fixing means (not shown) are also used to affix the board to a wall or other suitable location.

The backing board and the slotted panels are all made of card or cardboard with a laminated aqua-sealed surface which is strong, durable and fairly water-proof and can be written on using a marker pen and wiped clean.

Systems may be provided in a wide range of colour combinations and finishes, e.g. a "metal look" finish.

The system can also have any number of panels, of any size, with any number of slots.

The system of the present invention thus has all of the advantages of the known T-card system but is extremely lightweight, portable, easily transportable and can be stored and sold as a flat-packed system.

## Claims

1. A planning system comprising:
a backing board (1), and one or more panels (2) adapted to be mounted onto said backing board, said panels being provided with a plurality of slots (15) adapted to receive T-shaped cards; wherein the or each of said panels is provided in the form of a blank adapted to be assembled by the user into a three-dimensional panel.

2. A planning system comprising:
a backing board (1), and one or more panels (2) adapted to be mounted onto said backing board, said panels being provided with a plurality of slots (15) adapted to receive T-shaped cards; wherein the or each of said panels is provided in a substantially flat form and is made of card or cardboard such that it can be folded by the user into a three-dimensional panel.

3. The planning system of any preceding claim wherein the panels (2) are provided with an aqua-seal coating.

4. The planning system of claim 1, 2 or 3 wherein the backing board (1) is made of stiff board.

5. The planning system of claim 4, wherein the backing board (1) is provided with an aqua-seal coating.

6. A panel for mounting onto a backing board of a planning system, said panel having a front face (9) in which are provided a plurality of slots (15) adapted to receive T-shaped cards; said panel further comprising fastening points for attaching to said backing board (1) such that, in use, the front face (9) is spaced from the backing board (1) and wherein said panel is provided as a flat sheet of card or similar material adapted to be folded by the user to form a three-dimensional panel.

7. A panel according to claim 6, arranged to provide a three-dimensional panel shaped such that when attached to the backing board (1) the front face (9), in which the slots (15) are provided, is spaced from the backing board, thus defining a space for the main body of the T-cards inserted into the slots.

8. A panel according to claim 6 or 7 wherein the slots are smaller than the width of the top of the T-card such that when a card is inserted into a slot, the top remains visible on the front of the panel.

9. A panel according to claim 6, 7 or 7 which, when assembled forms a long rectangular box having a front face, in which the slots are formed, and a rear-face which is attached to the backing board.
